# EUROPÄISCHE PATENTANMELDUNG

(11) **EP 1 283 357 A1**
(43) Veröffentlichungstag der Anmeldung: **12.02.2003**
(21) Anmeldenummer: 02015496.9
(22) Anmeldetag: 12.07.2002
(51) Int. Cl.: F02N 11/00, F02D 35/00, B60K 31/00, B60K 6/02, B60K 28/00

(54) **Vorrichtung und Verfahren zum automatischen Einschalten und Ausschalten einer Brennkraftmaschine**

(30) Priorität: 11.08.2001 DE 10139595
(71) Anmelder: ROBERT BOSCH GMBH, 70442 Stuttgart (DE)
(72) Erfinder: Weiss, Ruediger, 71159 Moetzingen (DE)

(57) **Zusammenfassung**

Die Erfindung betrifft eine Vorrichtung zum automatischen Einschalten und Ausschalten einer Brennkraftmaschine (1) eines Kraftfahrzeugs, mit Mitteln (14, 15, 23, 27, 28, 29, 30) zum Erfassen eines Betriebszustandes der Brennkraftmaschine (1) und/oder des Kraftfahrzeugs und einem Steuergerät (24), das die Brennkraftmaschine (1) in Abhängigkeit von dem Betriebszustand einschaltet und ausschaltet. Um ein unnötiges Ausschalten der Brennkraftmaschine (1) zu vermeiden und um ein frühzeitiges Einschalten der Brennkraftmaschine (1) zu ermöglichen, wird vorgeschlagen, dass die Vorrichtung weitere Mittel (31) zum Erfassen einer Verkehrssituation im Umfeld des Kraftfahrzeugs aufweist und das Steuergerät (24) die Brennkraftmaschine (1) auch in Abhängigkeit von der Verkehrssituation einschaltet und ausschaltet.

## Beschreibung

Die vorliegende Erfindung betrifft eine Vorrichtung zum automatischen Einschalten und/oder Ausschalten einer Brennkraftmaschine eines Kraftfahrzeugs. Die Vorrichtung weist Mittel zum Erfassen eines Betriebszustandes der Brennkraftmaschine und/oder des Kraftfahrzeugs und ein Steuergerät auf. Das Steuergerät schaltet die Brennkraftmaschine in Abhängigkeit von dem Betriebszustand ein und/oder aus.

Die Erfindung betrifft außerdem eine automatisch einschaltbare und/oder ausschaltbare Brennkraftmaschine eines Kraftfahrzeugs. Die Brennkraftmaschine weist eine Vorrichtung zum automatischen Einschalten und/oder Ausschalten der Brennkraftmaschine auf. Die Vorrichtung umfasst Mittel zum Erfassen eines Betriebszustands der Brennkraftmaschine und/oder des Kraftfahrzeugs und ein Steuergerät, das die Brennkraftmaschine in Abhängigkeit von dem Betriebszustand einschaltet und/oder ausschaltet.

Schließlich betrifft die vorliegende Erfindung ein Verfahren zum automatischen Einschalten und/oder Ausschalten einer Brennkraftmaschine eines Kraftfahrzeugs, bei dem ein Betriebszustand der Brennkraftmaschine und/oder des Kraftfahrzeugs erfasst und die Brennkraftmaschine in Abhängigkeit von dem Betriebszustand eingeschaltet und/oder ausgeschaltet wird.

### Stand der Technik

Aus der DE 44 21 512 C1 ist eine Vorrichtung zum automatischen Einschalten und Ausschalten einer Brennkraftmaschine der eingangs genannten Art bekannt. Zum Ausschalten der Brennkraftmaschine wird die Kraftstoffzufuhr unterbrochen. Ein erneutes Einschalten der Brennkraftmaschine erfolgt durch eine Wiederaufnahme der Kraftstoffzufuhr und durch Betätigung eines Anlassers, um die Brennkraftmaschine zu Beginn des Startvorgangs in eine Drehbewegung zu versetzen. Der Betriebszustand der Brennkraftmaschine wird bei der bekannten Vorrichtung anhand der Kurbelwellendrehzahl und Getriebeeingangswellendrehzahl, der Stellung eines Kupplungspedals und der Stellung eines Fahrpedals erfasst. In Abhängigkeit von dem erfassten Betriebszustand entscheidet das Steuergerät, ob die Brennkraftmaschine ausgeschaltet oder wiedereingeschaltet wird.

In der genannten Druckschrift werden beispielhaft sechs Betriebszustände der Brennkraftmaschine erwähnt. Die Entscheidung, ob die Brennkraftmaschine ausgeschaltet oder wieder eingeschaltet wird, wird von dem Steuergerät allein in Abhängigkeit von den erfassten Betriebsgrößen bzw. von dem Betriebszustand der Brennkraftmaschine entschieden.

Ein Ausschalten der Brennkraftmaschine erfolgt bspw., falls der Leerlaufbetrieb einen zeitlichen Schwellenwert überschreitet. Dabei ist es für das Steuergerät nicht erkennbar, ob sich eine Fahrzeugkolonne, in der das Kraftfahrzeug steht, kurz vor Überschreiten des Schwellenwertes wieder in Bewegung setzt und das Ausschalten der Brennkraftmaschine in dieser Situation eigentlich nicht sinnvoll wäre. Beim Stand der Technik bleiben derartige Betrachtungen der Verkehrssituation im Umfeld des Kraftfahrzeuges unberücksichtigt. Das eigentliche Ziel der automatischen Abschaltung der Brennkraftmaschine eines Kraftfahrzeugs, nämlich eine Verringerung des Kraftstoffverbrauchs und des Abgasausstoßes, kann ins Umgekehrte verdreht werden, da das Ausschalten und unmittelbar darauf Wiedereinschalten der Brennkraftmaschine eine erhebliche Kraftstoffmenge verbraucht und zu einem besonders hohen Abgasausstoß führt.

Eingeschaltet wird die Brennkraftmaschine bspw. durch Treten des Gaspedals in Verbindung mit zusätzlichen Sicherheitsabfragen, wie bspw. "Bremse nicht getreten" oder "Kupplung nicht getreten". Um ein möglichst schnelles Einschalten der Brennkraftmaschine und Anfahren des Kraftfahrzeugs zu realisieren, weist das Kraftfahrzeug entweder eine leistungsfähige Elektromaschine (sog. Startergenerator) auf, so dass das Kraftfahrzeug z. B. in einer Kolonne im Stadtverkehr elektrisch anfahren kann und die Brennkraftmaschine dabei mit angelassen wird. Alternativ weist das Kraftfahrzeug einen herkömmlichen Anlasser auf, wodurch es beim Anfahren des Kraftfahrzeugs zu Verzögerungen kommen kann, da zunächst ein Wunsch zum Wiederanlassen der Brennkraftmaschine erkannt und die Brennkraftmaschine eingeschaltet werden muss, bevor das Kraftfahrzeug losfahren kann. Die Verzögerung wirkt sich insbesondere im Kolonnenverkehr störend aus, da ein gleichmäßiger Verkehrsfluss dadurch unmöglich wird.

Der vorliegenden Erfindung liegt deshalb die Aufgabe zugrunde, das automatische Einschalten und Ausschalten einer Brennkraftmaschine eines Kraftfahrzeugs dahingehend zu optimieren, dass ein unnötiges Ausschalten der Brennkraftmaschine vermieden und ein frühzeitiges Wiedereinschalten der Brennkraftmaschine ermöglicht wird.

Zur Lösung dieser Aufgabe schlägt die Erfindung ausgehend von der Vorrichtung zum automatischen Einschalten und Ausschalten einer Brennkraftmaschine der eingangs genannten Art vor, dass die Vorrichtung weitere Mittel zum Erfassen einer Verkehrssituation im Umfeld des Kraftfahrzeugs aufweist und das Steuergerät die Brennkraftmaschine auch in Abhängigkeit von der Verkehrssituation einschaltet und ausschaltet.

### Vorteile der Erfindung

Durch das erfindungsgemäß vorgeschlagene verkehrssituationsabhängige Ausschalten der Brennkraftmaschine eines Kraftfahrzeugs kann ein unnötiges Ausschalten und unmittelbar danach Wiedereinschalten der Brennkraftmaschine verhindert werden. Dies führt im Mittel zu einem reduzierten Kraftstoffverbrauch und zu verminderten Abgasemissionen. Außerdem kann mit der erfindungsgemäßen Vorrichtung die Brennkraftmaschine bspw. bei Kolonnenfahrt frühzeitig automatisch gestartet werden, da zum Anlassen der Brennkraftmaschine nicht erst auf einen ausdrücklichen Befehl des Fahrers, bspw. durch Betätigen des Gaspedals, gewartet werden muss. Ein mit der erfindungsgemäßen Vorrichtung ausgestattetes Kraftfahrzeug mit Einschalt- und Ausschaltfunktion für die Brennkraftmaschine kann automatisch gestartet werden, wenn ein Inbewegungsetzen vorausfahrender Fahrzeuge erkannt wird. Dadurch kann das Fahrzeug flüssig am Verkehr teilnehmen.

Die Umstellung von einem Kraftfahrzeug ohne eine solche Einschalt- und Ausschaltfunktion der Brennkraftmaschine auf ein Kraftfahrzeug mit einer solchen Funktion wird durch die erfindungsgemäße Vorrichtung erheblich erleichtert, was letzten Endes zu einer deutlich höheren Akzeptanz einer solchen automatischen Einschalt- und Ausschaltfunktion für die Brennkraftmaschine eines Kraftfahrzeugs durch die Fahrer führt.

Das Steuergerät kann bei der Entscheidung, ob die Brennkraftmaschine eingeschaltet oder ausgeschaltet werden soll, neben dem Betriebszustand der Brennkraftmaschine und/oder des Kraftfahrzeugs auch die Verkehrssituation in dem gesamten Umfeld des Kraftfahrzeugs heranziehen. Es ist bspw. denkbar auf mehrspurigen Straßen die Brennkraftmaschine bereits dann wieder anzulassen, wenn sich der Verkehr auf den benachbarten richtungsgleichen Fahrbahnen in Bewegung setzt.

Die vorliegende Erfindung ist für ein Kraftfahrzeug mit einem Schaltgetriebe gleichermaßen anwendbar wie für ein Kraftfahrzeug mit einem Automatikgetriebe. Bei einem Schaltgetriebe werden Informationen über den Betriebszustand des Getriebes anhand von Kupplungssensoren ermittelt, bei einem Automatikgetriebe werden diese Informationen von einer Getriebesteuerung an das Steuergerät zum Ausschalten und/oder Einschalten der Brennkraftmaschine geliefert.

Gemäß einer vorteilhaften Weiterbildung der vorliegenden Erfindung wird jedoch vorgeschlagen, dass die weiteren Mittel die Verkehrssituation in Fahrtrichtung vor dem Kraftfahrzeug erfassen. In diesem Bereich ist die Verkehrssituation für ein automatisches Ausschalten oder Einschalten der Brennkraftmaschine von besonderer Bedeutung, da das Erfassen der Verkehrssituation vor dem Kraftfahrzeug eine vorausschauende Entscheidung über Einschalten und Ausschalten der Brennkraftmaschine erlaubt.

Gemäß einer bevorzugten Ausführungsform der vorliegenden Erfindung wird vorgeschlagen, dass die weiteren Mittel als Verkehrssituation den Abstand von dem Kraftfahrzeug zu einem in Fahrtrichtung vor dem Kraftfahrzeug befindlichen weiteren Kraftfahrzeug ermitteln. Zur Ermittlung des Abstands zu einem vorausfahrenden Kraftfahrzeug werden vorzugsweise Sensoren einer Abstandsregelung (mittels Ultraschall, optisch oder mittels Radar) eingesetzt, mit denen das Kraftfahrzeug zum Einparken oder als elektronische Deichsel zu einem vorausfahrenden Fahrzeug ausgestattet ist.

Auf vorteilhafte Weise ermitteln die weiteren Mittel als Verkehrssituation eine Geschwindigkeit eines in Fahrtrichtung vor dem Kraftfahrzeug befindlichen weiteren Kraftfahrzeugs. Aus dem Abstand zwischen dem Kraftfahrzeug und dem vorausfahrenden Fahrzeug kann zusammen mit der Geschwindigkeit des Kraftfahrzeugs die Geschwindigkeit des vorausfahrenden Fahrzeugs ermittelt werden. Übersteigt die ermittelte Fahrzeuggeschwindigkeit einen vorgebbaren Schwellenwert, wird die Brennkraftmaschine wieder eingeschaltet. Der Schwellwert kann abhängig von der Neigung der Fahrbahn unter dem Kraftfahrzeug gewählt werden. Dadurch kann bei Stillstand des Kraftfahrzeugs in einer Steigung bereits bei geringfügiger Bewegung des weiteren Fahrzeugs auf eine Anfahrsituation geschlossen werden. Wird eine solche Anfahrsituation erkannt, wird ggf. nach Freigabe verschiedener Sicherheitsabfragen, die Brennkraftmaschine gestartet, damit anschließend bei Betätigung des Gaspedals sofort eine Beschleunigung des Kraftfahrzeugs möglich ist.

Gemäß einer anderen vorteilhaften Weiterbildung der vorliegenden Erfindung wird vorgeschlagen, dass die weiteren Mittel als Verkehrssituation einen Schaltzyklus einer Verkehrssteuerungs- oder Verkehrsregelungsanlage ermitteln. Die Verkehrssteuerungs- oder Verkehrsregelungsanlage kann eine Ampel, ein Verkehrsleitsystem, ein Warnlicht an einem Bahnübergang o. ä. sein. Vorteilhafterweise umfassen die weiteren Mittel optische Sensoren mit einer daran angeschlossenen Bildverarbeitungseinrichtung. Die Verkehrssituation kann dabei mittels optischer Sensoren durch Auswerten der optischen Signale der Verkehrssteuerungs- oder Verkehrsregelungsanlage erfasst und ausgewertet werden. Alternativ können die Verkehrssteuerungs- oder Verkehrsregelungsanlagen aber auch aktiv ihren Schaltzyklus betreffende Signale aussenden, die von geeigneten Mitteln in dem Kraftfahrzeug empfangen und in dem Steuergerät ausgewertet werden. Das Übermitteln der Signal kann über eine direkte Funk-, Infrarot- oder Ultraschalverbindung oder über eine Telekommunikationsverbindung erfolgen.

Gemäß einer weiteren bevorzugten Ausführungsform der vorliegenden Erfindung wird vorgeschlagen, dass die Vorrichtung die Neigung einer Fahrbahn erfasst, auf der das Kraftfahrzeug steht, und das Steuergerät die Brennkraftmaschine auch in Abhängigkeit von der Fahrbahnneigung einschaltet und ausschaltet. Die Neigung der Fahrbahn kann mittels eines Neigungssensors oder durch Auswerten verschiedener Betriebsgrößen der Brennkraftmaschine oder des Kraftfahrzeugs ermittelt werden.

Als eine weitere Lösung der Aufgabe der vorliegenden Erfindung wird ausgehend von der Brennkraftmaschine der eingangs genannten Art vorgeschlagen, dass die Vorrichtung weitere Mittel zum Erfassen einer Verkehrssituation im Umfeld des Kraftfahrzeugs aufweist und das Steuergerät die Brennkraftmaschine auch in Abhängigkeit von der Verkehrssituation einschaltet und ausschaltet.

Als noch eine weitere Lösung der Aufgabe der vorliegenden Erfindung wird ausgehend von dem Verfahren zum automatischen Einschalten und Ausschalten der Brennkraftmaschine der eingangs genannten Art vorgeschlagen, dass eine Verkehrssituation im Umfeld des Kraftfahrzeugs erfasst und die Brennkraftmaschine auch in Abhängigkeit von der Verkehrssituation eingeschaltet und ausgeschaltet wird.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: eine erfindungsgemäße Brennkraftmaschine eines Kraftfahrzeugs mit einer Vorrichtung zum automatischen Einschalten und Ausschalten der Brennkraftmaschine gemäß einer bevorzugten Ausführungsform;
- Figur 2: ein Ablaufdiagramm eines erfindungsgemäßen Verfahrens zum automatischen Ausschalten einer Brennkraftmaschine eines Kraftfahrzeugs gemäß einer bevorzugten Ausführungsform; und
- Figur 3: ein Ablaufdiagramm eines erfindungsgemäßen Verfahrens zum automatischen Einschalten einer Brennkraftmaschine eines Kraftfahrzeugs gemäß einer bevorzugten Ausführungsform.

### Beschreibung der Ausführungsbeispiele

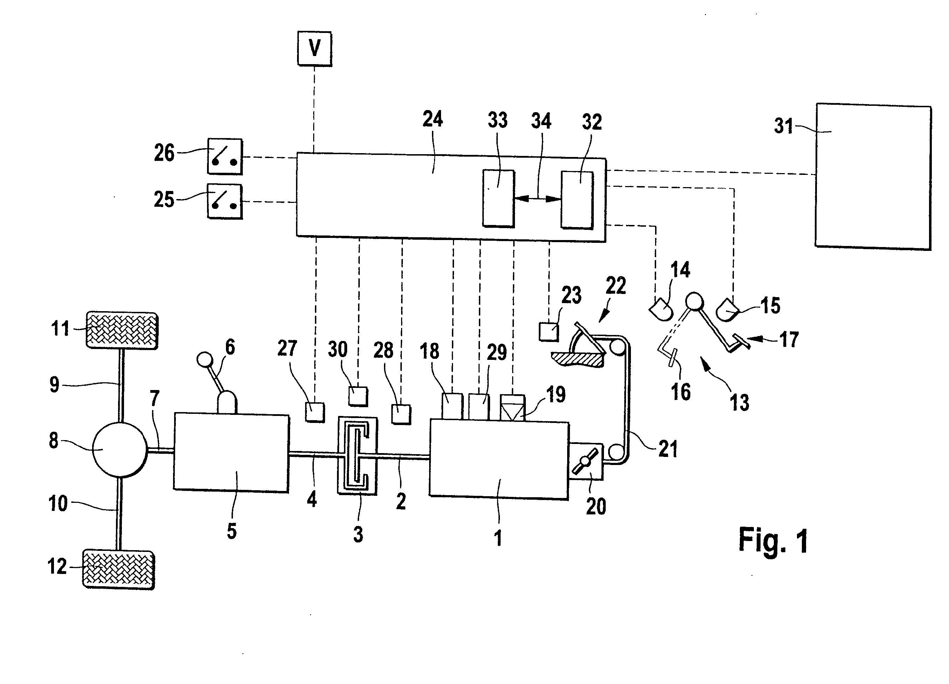

In Fig. 1 ist eine Brennkraftmaschine eines Kraftfahrzeugs mit dem Bezugszeichen 1 bezeichnet. Eine Kurbelwelle 2 der Brennkraftmaschine 1 ist über eine Kupplung 3 mit einer Getriebeeingangswelle 4 eines Getriebes 5 verbunden. Das Getriebe 5 ist als ein Schaltgetriebe ausgebildet, das mit einem Gangwahlhebel 6 versehen ist. Dem Getriebe 5 nachgeordnet ist eine Getriebeausgangswelle 7, die mit einem Differentialgetriebe 8 in Verbindung steht. Von dem Differentialgetriebe 8 gehen Achswellen 9, 10 mit Fahrzeugrädern 11, 12 ab.

Die Kupplung 3 zwischen der Brennkraftmaschine 1 und dem Getriebe 5 wird mechanisch durch die Auslenkung eines Kupplungspedals 13 betätigt, das über ein nicht dargestelltes Stellglied (z. B. einen Seilzug, Bowdenzug oder eine elektrische Signalleitung und Stellmittel) mit der Kupplung 3 verbunden ist. Dem Kupplungspedal 13 sind als Endlagensensoren ausgebildete Kupplungspedalsensoren 14, 15 zugeordnet, mit denen die Auslenkpositionen 16, 17 des Kupplungspedals 13 ermittelt werden können. Alternativ kann statt der Endlagensensoren auch ein an sich bekanntes Kupplungspotentiometer (nicht dargestellt) eingesetzt werden, mit dem die Auslenkpositionen des Kupplungspedals 13 in allen Stellungen exakt ermittelt werden können.

Der Brennkraftmaschine 1 ist ein Anlasser 18 zugeordnet, um die Brennkraftmaschine 1 beim Einschalten bzw. Starten in eine initiale Drehbewegung zu versetzen. Außerdem steht die Brennkraftmaschine 1 mit einer Kraftstoffpumpe 19 in Verbindung, mit der Kraftstoff über eine Kraftstoffleitung aus einem nicht dargestellten Kraftstoffvorratsbehälter heranführbar ist. Der Kraftstoff kann in ein Ansaugrohr oder direkt in Brennräume der Brennkraftmaschine 1 eingespritzt werden. Schließlich ist an der Brennkraftmaschine 1 ein Leistungsstellglied 20 vorgesehen, das im Falle einer mechanischen Betätigung bspw. über einen Seilzug 21 mit einem Fahrpedal 22 verbunden ist. Das Leistungsstellglied 20 ist bspw. als eine Drosselklappe oder als eine Benzineinspritzpumpe ausgebildet. Neben der mechanischen Verbindung zwischen dem Fahrpedal 22 und dem Leistungsstellglied 20 ist auch eine elektrische Signalisierung des Leistungswunsches über einen Sensor 23 an dem Fahrpedal 22 und ein Steuergerät 24 denkbar. In diesem Fall steht das Steuergerät 24 mit dem Leistungsstellglied 20 über eine nicht dargestellte Steuerleitung in Verbindung.

Das Steuergerät 24 besteht im Wesentlichen aus einem Mikrocomputer, der einen Mikroprozessor 32 und mindestens ein Speicherelement 33, das bspw. als ein Flash-Memory ausgebildet ist, aufweist. auf dem Speicherelement 33 ist ein Computerprogramm abgespeichert, das auf dem Mikroprozessor 32 ablauffähig und zur Ausführung des erfindungsgemäßen Verfahrens geeignet ist. Zum Ausführen des Computerprogramms wird dieses entweder als ganzes oder befehlsweise über eine Datenübertragungsverbindung 34 an den Mikroprozessor 32 übertragen. Das Steuergerät 24 dient zur Steuerung und/oder Regelung einer Einschalt- und Ausschaltfunktion der Brennkraftmaschine 1 des Kraftfahrzeugs. Die Einschalt- und Ausschaltfunktion kann durch Betätigung eines Schalters 25 manuell aktiviert oder deaktiviert werden. Ein weiterer Schalter 26, der mit dem Steuergerät 24 in Verbindung steht, dient zum manuellen Einschalten und Ausschalten der Brennkraftmaschine 1 und ist bspw. als ein Starterknopf oder als ein Zündschalter ausgebildet.

Das Steuergerät 24 steht zudem über Sensor- und/oder Steuerleitungen (gestrichelte Linien in Fig. 1) mit dem Fahrpedalsensor 23, mit dem Anlasser 18, mit der Kraftstoffpumpe 19, mit einem Drehzahlsensor 27 an der Getriebeeingangswelle 4, mit einem Drehzahlsensor 28 an der Kurbelwelle 2, mit den Kupplungspedalsensoren 14, 15 und mit einem Temperatursensor 29 an der Brennkraftmaschine 1 in Verbindung. Außerdem kann das Steuergerät 24 mit einem Kupplungssensor 30 über eine Sensorleitung zur Übermittlung des Kupplungsbetätigungszustandes verbunden sein.

Die vorliegende Erfindung ist für ein Kraftfahrzeug mit einem Schaltgetriebe 5 gleichermaßen anwendbar wie für ein Kraftfahrzeug mit einem Automatikgetriebe. Bei einem Schaltgetriebe werden Informationen über den Betriebszustand des Getriebes 5 anhand der Kupplungssensoren 30 ermittelt, bei einem Automatikgetriebe werden diese Informationen bspw. von einer Getriebesteuerung an das Steuergerät 24 geliefert. Die Getriebesteuerung kann mit dem Steuergerät 24 derart kommunizieren, dass bei einem Kraftfahrzeug mit einem Automatikgetriebe das Getriebe vor dem Ausschalten der Brennkraftmaschine 1 in eine Parking-Position (üblicherweise Position "P") gebracht wird.

Des weiteren sind Mittel 31 zum Erfassen einer Verkehrssituation im Umfeld des Kraftfahrzeugs vorgesehen, die über eine Sensorleitung zur Übermittlung der Verkehrssituation mit dem Steuergerät 24 in Verbindung stehen. Die Mittel 31 umfassen bspw. Sensoren einer Abstandsregelung (z. B. Ultraschall- oder Radarsensoren), optische Sensoren mit einer daran angeschlossenen Bildverarbeitungsvorrichtung oder beliebig anders ausgebildete Sensoren zum Erfassen der Verkehrssituation im Umfeld des Kraftfahrzeugs. Die Mittel 31 erfassen vorzugsweise die Verkehrssituation in Fahrtrichtung vor dem Kraftfahrzeug.

Als Verkehrssituation kann bspw. der Abstand von dem Kraftfahrzeug zu einem in Fahrtrichtung vor dem Kraftfahrzeug befindlichen weiteren Fahrzeug ermittelt werden. Zusammen mit der Geschwindigkeit des Kraftfahrzeugs kann aus dem Abstand zu einem vorausfahrenden Fahrzeug die Geschwindigkeit des vorausfahrenden Fahrzeugs ermittelt und als Verkehrssituation herangezogen werden. Die Mittel 31 können als Verkehrssituation auch einen Schaltzyklus einer Verkehrssteuerungs- oder Verkehrsregelungsanlage ermitteln. Die Verkehrssteuerungs- oder Verkehrsregelungsanlage ist bspw. als eine Ampelanlage, als ein Verkehrsleitsystem, als eine Signalanlage eines Bahnübergangs o. ä. ausgebildet. Zur Ermittlung des Schaltzyklus einer Verkehrssteuerungsoder Verkehrsregelungsanlage umfassen die Mittel 31 bspw. optische Sensoren und eine daran angeschlossene Bildverarbeitungsvorrichtung oder aber Mittel zum Empfangen eines Signals, das von der Verkehrssteuerungs- oder Verkehrsregelungsanlage aktiv ausgesendet wird und Informationen über den Schaltzyklus enthält.

Während in dem Ausführungsbeispiel aus Fig. 1 das Steuergerät 24 ein gesonderter Mikrocomputer ist, können die erfindungsgemäßen Einschalt- und Ausschaltfunktionen für die Brennkraftmaschine 1 auch in einem in Kraftfahrzeugen heute üblicherweise vorhandenen Motorsteuergerät oder einem beliebig anderen Steuergerät untergebracht werden.

Die Sensoren 14, 15, 23, 27, 28, 29, 30 dienen zum Erfassen eines Betriebszustands der Brennkraftmaschine 1 und/oder des Kraftfahrzeugs. Der Betriebszustand wird von dem Steuergerät 24 zur Entscheidung herangezogen, ob die Brennkraftmaschine 1 automatisch ausgeschaltet und/oder wieder eingeschaltet werden soll. In der DE 44 21 512 C1 werden in Sp. 3, Z. 52 - Sp. 6, Z. 28 beispielhaft sechs Betriebszustände beschrieben, anhand derer eine Entscheidung gefällt wird, die Brennkraftmaschine 1 auszuschalten und/oder wieder einzuschalten. Auf diese Ausführungen wird hier ausdrücklich Bezug genommen.

Gemäß der vorliegenden Erfindung wird vorgeschlagen, zusätzlich zu dem Betriebszustand der Brennkraftmaschine 1 und/oder des Kraftfahrzeugs auch die Verkehrssituation im Umfeld des Kraftfahrzeugs bei der Entscheidung heranzuziehen, ob die Brennkraftmaschine 1 ausgeschaltet und/oder wieder eingeschaltet werden soll. Dazu sind die Mittel 31 zum Erfassen der Verkehrssituation vorgesehen. Durch die Berücksichtigung der Verkehrssituation kann ein unnötiges Ausschalten der Brennkraftmaschine 1 vermieden und ein frühzeitiges Wiedereinschalten der Brennkraftmaschine 1 ermöglicht werden, so dass einerseits der Kraftstoffverbrauch und die Abgasemissionen reduziert werden können und andererseits ein flüssiges Mitschwimmen im Kolonnenverkehr möglich wird. Darüber hinaus wird mit der erfindungsgemäßen automatischen Einschalt- und Ausschaltfunktion eine Umstellung von einem herkömmlichen Kraftfahrzeug ohne eine solche Funktion auf ein Kraftfahrzeug mit einer solchen automatischen Einschaltund Ausschaltfunktion für einen Fahrer des Kraftfahrzeugs deutlich erleichtert, wodurch die Akzeptanz von Kraftfahrzeugen mit einer solchen Funktion deutlich erhöht wird.

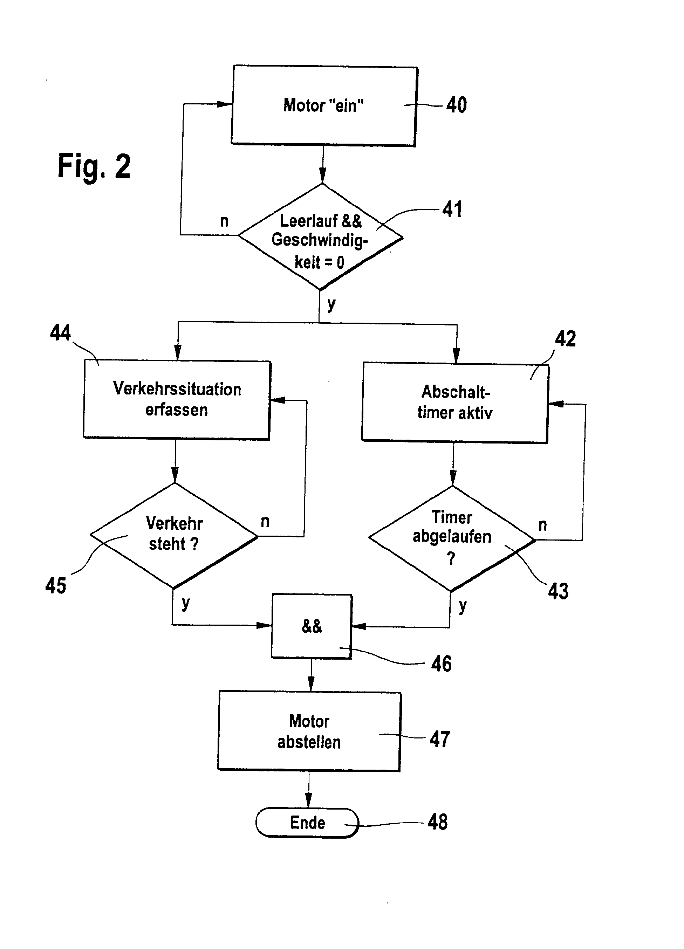

In Fig. 2 ist ein Ablaufdiagramm eines erfindungsgemäßen Verfahrens zum automatischen Ausschalten der Brennkraftmaschine 1 dargestellt. Das Verfahren beginnt in einem Funktionsblock 40 mit eingeschalteter Brennkraftmaschine 1. In einem anschließenden Abfrageblock 41 wird überprüft, ob sich das Getriebe 5 in einer Leerlaufposition befindet und ob die Geschwindigkeit des Kraftfahrzeugs gleich Null ist. Falls ja, wird daraus geschlossen, dass sich die Brennkraftmaschine 1 in einem Betriebszustand befindet, der ein Ausschalten der Brennkraftmaschine 1 erlauben würde. Falls nein, wird die Brennkraftmaschine 1 weiterbetrieben.

Falls sich die Brennkraftmaschine 1 in einem Betriebszustand befindet, in dem sie ausgeschaltet werden könnte, wird in einem Funktionsblock 42 ein Abschaltzeitgeber aktiviert und in einem Abfrageblock 43 überprüft, ob der Zeitgeber abgelaufen ist. Zusätzlich wird in einem Funktionsblock 24 die Verkehrssituation im Umfeld des Kraftfahrzeugs erfasst und in einem Abfrageblock 45 überprüft, ob der Verkehr steht, d. h. ob insbesondere vor dem Kraftfahrzeug fahrende weitere Kraftfahrzeuge zum Stehen kommen. Falls der Zeitgeber abgelaufen ist und der Verkehr zum Stehen gekommen ist (Funktionsblock 46), wird die Brennkraftmaschine 1 in einem Funktionsblock 47 ausgeschaltet. In einem Funktionsblock 48 ist das erfindungsgemäße Verfahren beendet.

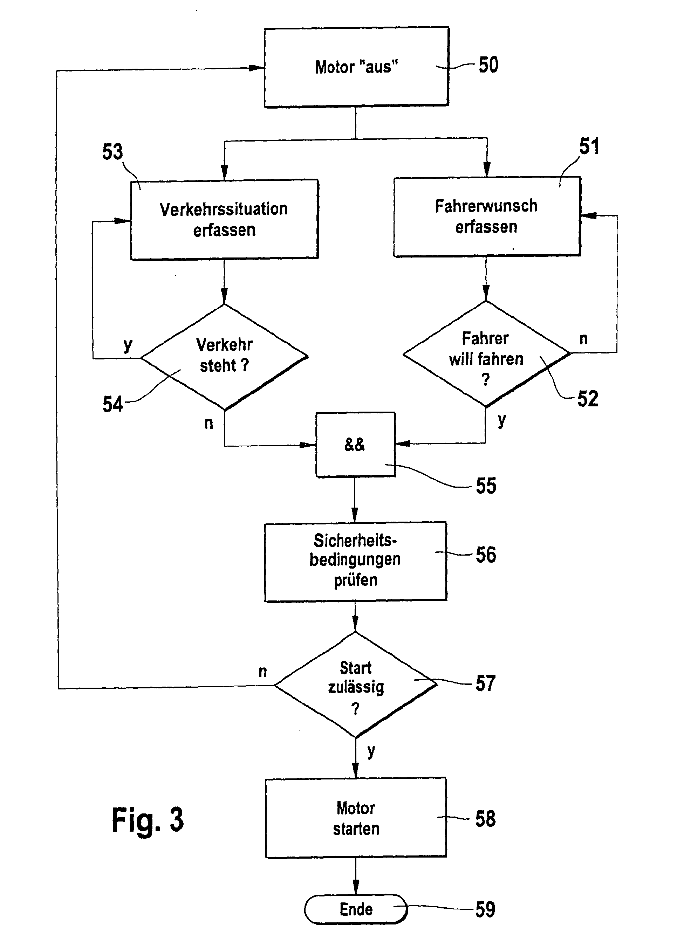

In Fig. 3 ist ein Ablaufdiagramm eines erfindungsgemäßen Verfahrens zum Wiedereinschalten der Brennkraftmaschine 1 dargestellt. Das Verfahren beginnt in einem Funktionsblock 50 mit ausgeschalteter Brennkraftmaschine 1. Dann wird in einem Funktionsblock 51 der Fahrerwunsch erfasst, bspw. über den Fahrpedalsensor 23. In einem Abfrageblock 52 wird überprüft, ob der Fahrer fahren will. Zusätzlich wird in einem Funktionsblock 53 die Verkehrssituation im Umfeld des Kraftfahrzeugs erfasst. In einem Abfrageblock 54 wird überprüft, ob der Verkehr steht.

Falls der Fahrer fahren will und der Verkehr nicht steht (Funktionsblock 55), werden in einem Funktionsblock 56 Sicherheitsbedingungen geprüft, bspw. "Getriebe 5 in Leerlaufposition" oder Kupplungspedal getreten". In einem Abfrageblock 57 wird überprüft, ob die Sicherheitsbedingungen erfüllt und ein Einschalten der Brennkraftmaschine 1 zulässig ist. Falls die Sicherheitsbedingungen nicht erfüllt sind, wird wieder zu dem Funktionsblock 50 verzweigt und die Brennkraftmaschine 1 bleibt ausgeschaltet. Falls die Sicherheitsbedingungen jedoch erfüllt sind, wird die Brennkraftmaschine 1 in einem Funktionsblock 58 mit Hilfe des Anlassers 18 durch Aktivieren der Kraftstoffeinspritzpumpe 19 eingschaltet. In einem Funktionsblock 59 ist das erfindungsgemäße Verfahren beendet.

## Patentansprüche

1. Vorrichtung zum automatischen Einschalten und/oder Ausschalten einer Brennkraftmaschine (1) eines Kraftfahrzeugs, mit Mitteln (14, 15, 23, 27, 28, 29, 30) zum Erfassen eines Betriebszustands der Brennkraftmaschine (1) und/oder des Kraftfahrzeugs und einem Steuergerät (24), das die Brennkraftmaschine (1) in Abhängigkeit von dem Betriebszustand einschaltet und/oder ausschaltet, **dadurch gekennzeichnet, dass** die Vorrichtung weitere Mittel (31) zum Erfassen einer Verkehrssituation im Umfeld des Kraftfahrzeugs aufweist und das Steuergerät (24) die Brennkraftmaschine (1) auch in Abhängigkeit von der Verkehrssituation einschaltet und/oder ausschaltet.

2. Vorrichtung nach Anspruch 1, **dadurch gekennzeichnet, dass** die weiteren Mittel (31) die Verkehrssituation in Fahrtrichtung vor dem Kraftfahrzeug erfassen.

3. Vorrichtung nach Anspruch 2, **dadurch gekennzeichnet, dass** die weiteren Mittel (31) als Verkehrssituation den Abstand von dem Kraftfahrzeug zu einem in Fahrtrichtung vor dem Kraftfahrzeug befindlichen weiteren Kraftfahrzeug ermitteln.

4. Vorrichtung nach einem der Ansprüche 1 bis 3, **dadurch gekennzeichnet, dass** die weiteren Mittel (31) Sensoren einer Abstandsregelung umfassen.

5. Vorrichtung nach einem der Ansprüche 2 bis 4, **dadurch gekennzeichnet, dass** die weiteren Mittel (31) als Verkehrssituation eine Geschwindigkeit eines in Fahrtrichtung vor dem Kraftfahrzeug befindlichen weiteren Kraftfahrzeugs ermitteln.

6. Vorrichtung nach einem der Ansprüche 2 bis 4, **dadurch gekennzeichnet, dass** die weiteren Mittel (31) als Verkehrssituation einen Schaltzyklus einer Verkehrssteuerungs- oder Verkehrsregelungsanlage ermitteln.

7. Vorrichtung nach einem der Ansprüche 1 bis 6, **dadurch gekennzeichnet, dass** die weiteren Mittel (31) optische Sensoren mit einer daran angeschlossenen Bildverarbeitungsvorrichtung umfassen.

8. Vorrichtung nach einem der Ansprüche 1 bis 7, **dadurch gekennzeichnet, dass** die Vorrichtung die Neigung einer Fahrbahn erfasst, auf der das Kraftfahrzeug steht, und das Steuergerät (24) die Brennkraftmaschine (1) auch in Abhängigkeit von der Fahrbahnneigung einschaltet und ausschaltet.

9. Automatisch einschaltbare und ausschaltbare Brennkraftmaschine (1) eines Kraftfahrzeugs, mit einer Vorrichtung zum automatischen Einschalten und/oder Ausschalten der Brennkraftmaschine (1), wobei die Vorrichtung Mittel (14, 15, 23, 27, 28, 29, 30) zum Erfassen eines Betriebszustands der Brennkraftmaschine (1) und/oder des Kraftfahrzeugs und ein Steuergerät (24), das die Brennkraftmaschine (1) in Abhängigkeit von dem Betriebszustand einschaltet und/oder ausschaltet, aufweist, **dadurch gekennzeichnet, dass** die Vorrichtung weitere Mittel (31) zum Erfassen einer Verkehrssituation im Umfeld des Kraftfahrzeugs aufweist und das Steuergerät (24) die Brennkraftmaschine auch in Abhängigkeit von der Verkehrssituation einschaltet und/oder ausschaltet.

10. Verfahren zum automatischen Einschalten und/oder Ausschalten einer Brennkraftmaschine (1) eines Kraftfahrzeugs, bei dem ein Betriebszustand der Brennkraftmaschine (1) und/oder des Kraftfahrzeugs erfasst und die Brennkraftmaschine (1) in Abhängigkeit von dem Betriebszustand eingeschaltet und/oder ausgeschaltet wird, **dadurch gekennzeichnet, dass** eine Verkehrssituation im Umfeld des Kraftfahrzeugs erfasst und die Brennkraftmaschine (1) auch in Abhängigkeit von der Verkehrssituation eingeschaltet und/oder ausgeschaltet wird.
